Europäisches Patentamt

European Patent Office

Office européen des brevets

(19)

(11) Publication number: **0 235 191**
**B1**

(12) **EUROPEAN PATENT SPECIFICATION**

(45) Date of publication of patent specification: **17.05.89**

(21) Application number: **86904915.5**

(22) Date of filing: **05.08.86**

(86) International application number:
**PCT/IT86/00065**

(87) International publication number:
**WO 87/01367 12.03.87 Gazette 87/06**

(51) Int. Cl.⁴: **C 03 B 23/07**

(54) **MACHINE FOR MANUFACTURING BLOWN GLASS BODIES, WITHOUT MOLDS, BY MEANS OF PNEUMATIC MANDRELS.**

(30) Priority: **30.08.85 IT 2202985**

(43) Date of publication of application:
**09.09.87 Bulletin 87/37**

(45) Publication of the grant of the patent:
**17.05.89 Bulletin 89/20**

(84) Designated Contracting States:
**AT DE FR GB**

(56) References cited:
**DE-C- 925 972**
**GB-A- 12 824**
**GB-A- 263 766**
**US-A-1 342 821**
**US-A-3 189 423**

(73) Proprietor: **ZANI, Giulio**
**Via Caradosso, 6**
**I-22100 Sagnino (IT)**

(72) Inventor: **ZANI, Giulio**
**Via Caradosso, 6**
**I-22100 Sagnino (IT)**

(74) Representative: **Filippi, Remo**
**Via Aldrovandi, 5**
**I-20129 Milano (IT)**

Courier Press, Leamington Spa, England.

## Description

Technical field

The above invention concerns the production of hollow glass bodies, used especially as Christmas ornaments, by means of blowing.

Present techniques

The hollow glass bodies referred to above must, as is known, be as light and as lustrous as it is possible to make them while the blowing aperture must be of minimum size.

For these reasons it is at present preferable to make them by hand using glass tubes for the purpose.

The tube is made to spin while being heated by a burner to obtain bulb-shaped bodies each of which has an appendix or tail at its end.

The bulb so obtained is then heated to melting point and is then swollen to the desired size by blowing through the tail.

Glass blown in a free environment acquires a high surface lustre and its appearance is exactly that required for the product.

The cost of making hollow glass balls by hand is however very high and often prohibitive.

Another process is realizable by mechanical means but this one requires the use of molds into which the hollow body is blown.

The cost of this process is much lower but it gives an inferior quality product in no way comparable to that obtainable by the manual process.

The patent GB—A—12 824, whose technique seems most closely to approach that of the present invention, describes a machine for producing hollow glass bodies, especially incandescent bulbs for electric lamps, made from segments of tube supported at the two ends by vices aligned in a straight line.

The bulbs obtainable from each segment are only those permitted by the length of the segment, said length being limited by the need to ensure that said segment remains rigid.

A single vice cannot support segments projecting outward and it is thus impossible to form a bulb having a continuous spherical surface and having only one appendix for blowing into, as Christmas decorations require.

As swelling pressure on the glass bulbs extends to the whole segment of tube and not to a specific hollow body, it is impossible to adjust said pressure precisely to obtain a bulb perfect in shape and dimensions, in a free environment without molds.

The machine subject of patent GB—A—12 824 in fact makes hollow bodies inside molds and not in a free environment.

A tube segment must be mounted in the machine for each working cycle, it being impossible to feed into the machine a glass tube of unlimited length from which segments are detached one at a time.

With this machine there is no way of drawing out the glass tube so that a single blowing appendix of narrow diameter is formed.

It is thus clear that, with patent GB—A—12 824, production of hollow glass bodies, perfectly shaped and having a continuous brilliantly polished surface, a single blowing appendix of narrow diameter and being extremely light in weight, is not possible, though these features are essential for Christmas decorations.

Further, the manufacturing process cannot be quick and inexpensive, a necessary requirement for Christmas decorations which, by their very nature, must be low-cost products.

By means of the present invention the hollow bodies concerned can be made mechanically and almost automatically but possessing a quality comparable to that obtainable by manual processes at considerably lower costs as will be described below.

Description of the invention

The machine subject of the invention produces hollow bodies detaching one after another, by heat and traction, drawn segments of a glass tube and then blowing them up when still hot in a free environment without making use of molds.

For these operations the machine comprises two aligned mandrels, one for feed and the other for blowing.

These mandrels cause the glass tube to be firmly held by pressure, generated by a fluid, especially air, exerted on it by soft bodies such as rubber tubes and the like which surround the glass tube.

Action on the glass tube and on the hollow body formed from it is therefore taken with about the same degree of sensitivity, gentleness and strength as would be applied by the hands and mouth of a specialized glass blower.

The feed mandrel rotates, around its longitudinal axis, in relation to a cylindrical casing supported by a sliding carriage that moves along a longitudinal guide fixed to the bed of the machine.

Said mandrel comprises a rigid axial tube, in whose walls there are holes in substantially opposing positions, the glass tube passing through the rigid tube. This latter tube is surrounded by an elastic tube, of rubber and the like, which is sealed and is in turn surrounded by a ring-shaped chamber.

Introduction of compressed air into this chamber makes possible centripetal contraction of the elastic tube, expansion of areas of said elastic tube through the holes in the sides of the rigid tube causing said areas to exert pressure on the glass tube such as will keep it fixed to the mandrel.

The blowing mandrel rotates around its longitudinal axis in relation to a cylindrical casing supported by an upright part of the machine.

Said mandrel comprises a sealed elastic tube, of rubber and the like which surrounds the drawn end of the glass tube introduced into the mandrel, said elastic tube being in turn surrounded by a ring-shaped chamber. By letting compressed air into said chamber it is possible to cause centripetal contraction of the elastic tube and therefore pressure by its intermediate part on the drawn end of the glass tube in such a way as to keep it fixed to the mandrel.

There is an axial duct on a hind part of the mandrel, said duct being connected to a pipe for blowing in air.

The back end of the elastic tube is fixed to a cylindrical expansion which lengthens the above duct without interruption.

Therefore, by shrinkage of the elastic tube round the end of the glass tube a hermetic seal is created between the latter and the pipe for blowing in air.

Sequence of operations

Each sequence of operations takes place substantially as follows.

Starting from its front end stop and gripping the glass tube the feed mandrel moves towards the blowing mandrel into which it introduces the drawn end of said tube which is then gripped by said blowing mandrel.

When the length of tube between the two mandrels has been heated by a burner to melting point, the feed mandrel moves backwards and in so doing stretches said length of tube.

The burner moves to a point lying between the end of the stretched length of the tube and that part of it held by the flowing mandrel.

When the glass has reached melting point the feed mandrel moves still further back to the end of its stroke and in doing so separates the stretched length from that part of the tube held by the blowing mandrel. That part of the tube remains closed like an ampoule and when it has been sufficiently heated by the burner, the blowing pipe is connected to a blowing device which swells the ampoule to the desired size.

At this point an expeller extracts the completed hollow body while a cutter cuts off the molten tip of the drawn length of glass tube.

A new sequence, similar to the previous one, can then be automatically repeated.

The characteristics and purposes of the invention will be made even clearer by the following example of its execution illustrated by diagrammatical drawings.

Example of execution

Figures 1 to 5 show side views of the blowing machine, subject of this present invention, in its various functioning stages. .

Figure 1. End of a sequence with extraction of the finished ampoule.

Figure 2. Start of a fresh sequence.

Figure 3. Stretching stage.

Figure 4. Separation of the tube from the ampoule being formed.

Figure 5. The tip of the tube is cut off and the ampoule completed.

Figure 6. Cut-through view of the pneumatic tube-feed mandrel at the beginning of a new sequence.

Figure 7. Cut-through view of the pneumatic blowing mandrel with an ampoule in progress of formation.

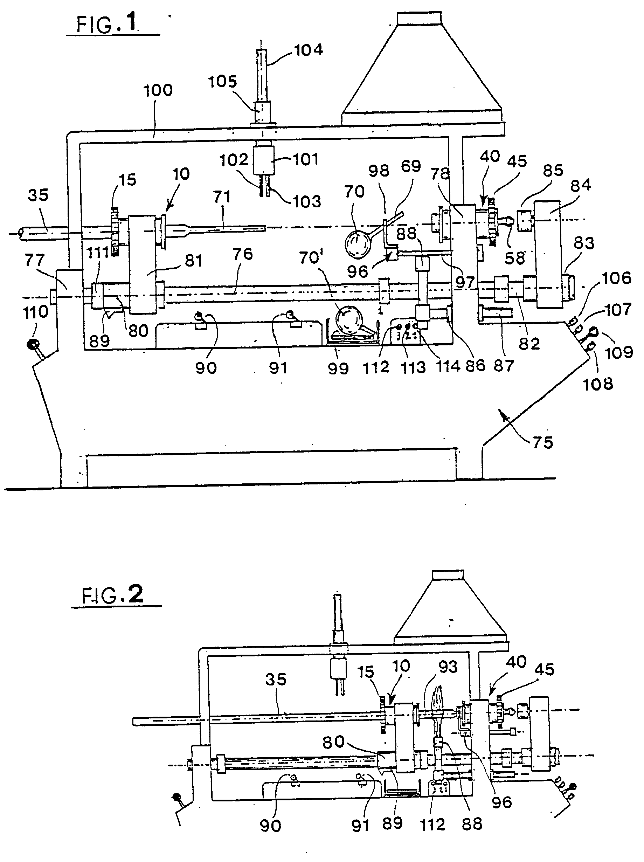

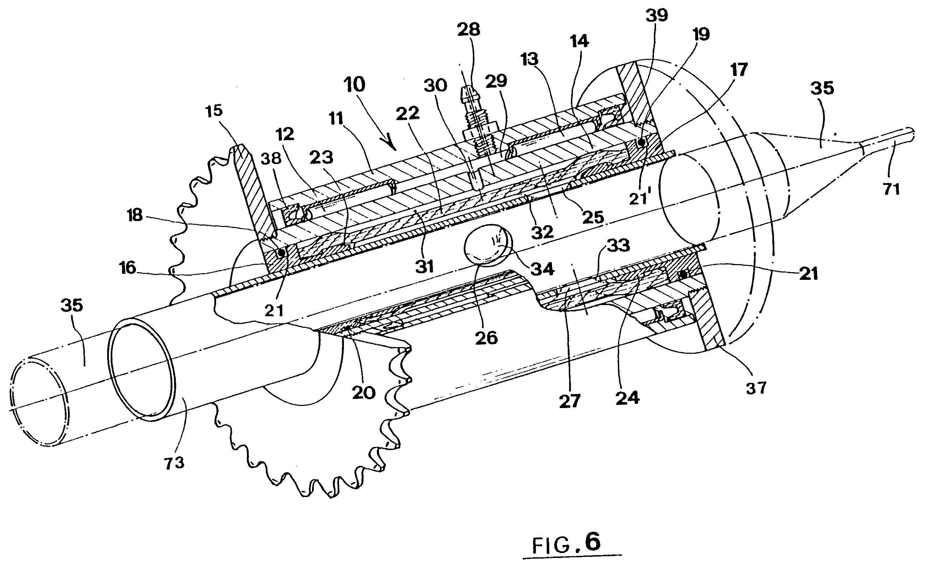

The machine (Figure 1) comprises a bed 75 with a fixed guide bar 76 supported by uprights 77 and 78. The carriage 80 can slide along the bar, and fixed to said carriage is the arm 81 which supports the tube-feed mandrel 10 (see also detail in Figure 6) that grips the glass tube 35 with its drawn out end 71.

At the end 82 of the bar the carriage 83 can slide and fixed to said carriage is the vertical arm 84 which supports the air blower 85.

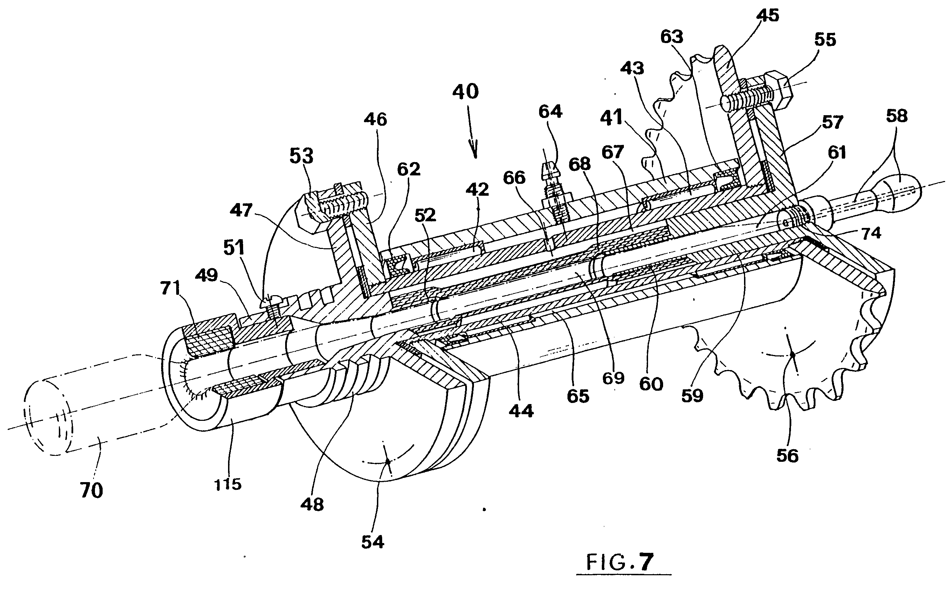

The upright 78 supports the mandrel 40 for blowing up hollow bodies (shown in detail in Figure 7) while gripping the ampoule 70, with stretched out appendix 69, in progress of formation.

At the base of the upright there is a bushing 86 inside of which can slide the rod 87 that supports the burner 88 at one end.

The V-shaped cam 89 is fixed to the carriage 80 and the levers 90 and 91 are placed in the path of the cam.

The expelling device 96, supported and guided by the translating rod 97, fitted with pincers 98, is also mounted on said upright.

Below the expeller a conveyor belt 99 rests on the bed of the machine.

On the machine's upper cross piece 100 there is the cutter 101, with tools 102 and 103, fixed to the rod 104 sliding vertically in the bushing 105 fixed to the cross piece. The gas 106, oxygen 107 and air 108 regulating devices can be seen on the right hand side of the machine as well as the knob 109 which controls opening of the mandrel 40. On the left hand side of the machine there is the knob 110 for opening and mandrel 10.

Figures 6 and 7 respectively show in greater detail the feed mandrel 10 and the blowing mandrel 40, both pneumatically operated.

The feed mandrel 10 comprises a cylindrical casing 11 fixed by means of arm 81 to the guide bar 76 mounted on the bed 75 of the machine.

Inside said casing 11 and resting on roller bearings 12 and 13, there is sleeve 14 to which is fixed the crown wheel 15 through which connection is made to an electric motor, not shown in the Figure, needed for rotating the mandrel 10. Disc 37 is screwed on to the other end of the sleeve. Sleeve 14 houses the aluminum tube 73 fixed to the sleeve by means of bushings 16 and 17 with their respective annular channels 21 and 21' for washers 18 and 19.

Between the aluminum tube 73 and the sleeve 14 an elastic tube 22, of rubber and the like, is inserted and is forced at its two ends onto the ring-shaped reliefs 23 and 24 respectively fixed to the bushings 16 and 17.

Holes 25, 26, 27 and others are made in the sides of the tube 73.

The ring-shaped washers 38 and 39 are placed between the casing 11 and the above sleeve.

A connector 28 is mounted on the side of the casing 11, for letting in compressed air which, through the ring-shaped cavity 29 and a series of holes, such as 30, passes into the ring-shaped cavity 31 causing zones of tube 22, such as 32, 33, 34, to press down into the holes 25, 26, 27 and these depressed zones grip the glass tube 35 inserted into the aluminum tube 73. The glass tube is thus firmly held but with the same sensitivity, gentleness and strength as it would be in the hands of a skilled glass blower.

The pneumatic mandrel 40 (Figure 7) for the object to be blown comprises a cylindrical casing 41, fixed to the upright 78 of the bed 75, that houses inside it, by means of the roller bearings 42 and 43, the sleeve 44 fixed to which is the crown wheel 45 for connection to an electric motor, not seen in the drawing, needed for rotating the mandrel. Fixed to the other end of the sleeve is the ring-shaped disk 46 on which is mounted the pipe 48 by means of the disk 47 and screws 53, 54.

At one end of said pipe there is a mouth 49 for insertion of the interchangeable bushing 50 that can be fixed by means of the transversal screw 51, and on the inside a cylindrical expansion 52 coaxial with the mandrel. By means of screws 55, 56, the disk 57 is fixed to the crown wheel 45, said disk comprising externally the threading 74 for fitting on the pipe 58 connecting to the air blowing mouth and having on the inside the cylindrical body 59 with the cylindrical expansion 60 counterposed to the cylindrical expansion 52 of the pipe 48.

Said body is provided with the through hole 61 coaxial with the mandrel.

The ring-shaped washers 62 and 63 are placed between the casing 41 and the sleeve 44.

On the side of the casing 41 a connector 64 is mounted for letting in compressed air which, through the ring-shaped cavity 65 and a series of holes like 66, passes into the ring-shaped cavity 67 which is created between the elastic rubber tube 68 inserted at its ends respectively in the axial and counterposed cylindrical expansions 52 and 60 and inside the sleeve 44.

The air blown in thus causes the elastic tube 68 to shrink onto the stretched end 69 of the glass tube from which the blown body is formed with the same sensitivity, gentleness yet firm handling typical of the skilled glass blower.

The interchangeable bushing 50 has its inside part of refractory material 115 so as to withstand the high temperatures of the glass tube and especially of the ampoule 70 being formed by the blown air.

A drive unit with cam shaft worked by an electric motor and adequate mechanisms, served by pneumatic cylinders, regulates the movements of the various mechanical parts.

The mandrels and the conveyor belt are moved by electric motors.

A central control unit, with shutter vanes and with mechanical and pneumatic devices, ensures operation of all parts even in the worst environmental conditions.

For the sake of simplicity this equipment is not shown in the drawings because the techniques of such equipment are already well known.

## Operation

At the end of each sequence the machine appears as drawn in Figure 1.

The ampoule 70 with its terminal appendix 69 is expelled from the mandrel 40, which opens for the purpose, by means of the expelling device 96 fitted with pincers 98. The ampoule falls down onto the conveyor belt (99).

The figure shows the ampoule 70' from the preceding sequence while it is about to be carried away on said conveyor belt.

If the automatic repetition switch has been turned on the new sequence begins immediately after the ampoule has fallen or else it does so if a special control device has been worked.

To start a series of sequences, the mandrel 10 must be moved to its position in Figure 1 against its limit stop 111.

Lever 110 is moved to open the mandrel manually, the tube of glass, like 35 with it stretched end 71, is inserted and the mandrel is then closed.

The various sequences take place as follows:

### Phase one

The carriage 80 moves the mandrel 10 with its glass tube 35 until the extremity 71 of the tube has penetrated inside the mandrel 40 which then closes.

The burner 88 moves to position "3" marked by 112, and then lights up (Figure 2).

The mandrels rotate continuously driven by the electric motors by means of crown wheels 15 and 45.

### Phase two

The mandrel 10 opens, makes a short backward movement until the lever 91 is lowered by the cam 89 and then closes again leaving between it and mandrel 40 a length 93 of tube equivalent to the amount needed to form the hollow blown body.

### Phase three

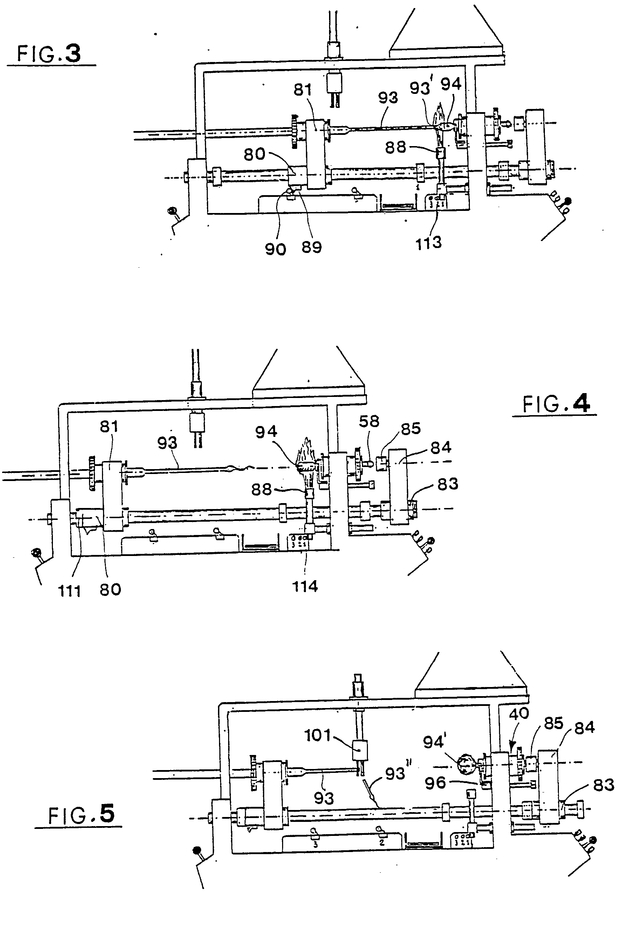

The burner extinguishes itself when the flame has brought the glass to melting point. The mandrel 10 moves further back, until the lever 90 is lowered by the cam 89, together with the tube 35, part 93 of which is stretched (Figure 3).

### Phase four

The burner moves onto position N° 2, indicated by 113, and lights up heating the junction 93' between part 93 and part 94 fixed to the mandrel 40.

The mandrel 10 moves back to its limit stop 111 and in so doing separates the two said parts 93 and 94 (Figure 4).

### Phase five

The burner extinguishes itself.

As a consequence of the movement of carriage 83, the air blower 85 is inserted into pipe 58 of the mandrel 40 and blows up the "drop" of glass formed at the end of part 94 still gripped by the mandrel 40.

## Phase six

The air blower detaches itself from pipe 58. The burner moves onto position N° 1, indicated by 114, and lights up.

## Phase seven

The burner extinguishes itself.

The blower is once again inserted into the pipe and blows in such a way as to transform piece 94 into the spherical ampule 94'.

The cutter 101 moves down and cuts through the tip 93'' (Figure 5).

The expeller 96 expels the ampoule 94' which falls onto the conveyor belt as shown in Figure 1 for ampoule 70'.

The sequence can then start again repeating the phases described above.

## Advantages

As explained, the invention makes possible formation of hollow bodies, especially suitable for Christmas decorations, automatically, without molds, in a free environment, where:

—feed is continuous by using glass tubes of unlimited length;

—the glass tube is held firm by pneumatic pincers that avoid any abrasion or breakage;

—swelling pressure is precisely adjusted to produce perfectly shaped almost weightless spherical bulbs;

—that part of the tube used to form the blowing appendix is automatically drawn out and elongated;

—the completed hollow body is automatically detached.

The hollow glass bodies are therefore shaped with the same precision, delicacy and strength possessed by the hand and lips of a skilled glass blower and, like those shaped by hand, possess the same specific lightness and maximum surface brilliance, minimum dimensions of the blowing elongation and, generally speaking, all the fine qualities required for Christmas decorations but at a drastically lower cost.

## Claims

1. Blowing machine for automatic production of hollow glass bodies, starting with glass tubes, characterized in that said bodies (70), (94) are made from segments of tube (35) that become detached by heat and traction, one at a time, blown up when hot, in a free environment, without molds, by use of two aligned and rotating mandrels, one a feed mandrel (10) through which the glass tube (35) passes intermittently, and the other a blowing mandrel (40), the glass tube (35) being held firm by the feed mandrel (10) by means of a pneumatic pincer formed of an axial coupling (73) surrounded hermetically by an elastic rubber tube (22), in turn surrounded by a cylindrical chamber (31), it being possible, by blowing compressed air into said chamber, to obtain, by the holes (25, 26, 27) passing through the coupling (73), expansion of zones (32, 33, 34) in the elastic tube (22) and therefore pressure by said zones on the glass tube (35) such as to hold said glass tube firmly to the mandrel (10), the terminal part (69, 71) of the glass tube (35), elongated during the preceding cycle, being gripped in the blowing mandrel (40) by a pneumatic pincer formed of an axial elastic rubber coupling (68) that hermetically connects the internal cylindrical expansion (52) of the anterior pipe union (48) with the internal cylindrical expansion (60) of a posterior cylindrical body (59), having an axial hole (61) passing through it, said latter body being fixed to a connector piece (58) joining it to the air blower (85), said coupling (68) being surrounded by a hermetically sealing cylindrical chamber (65), it being thus possible, by filling said chamber with compressed air, to cause centripetal contraction of coupling (68) making it grip the elongated end (69, 71) of the glass tube (35) further ensuring a hermetic seal between this latter and the connector piece (58) through which the glass blowing air enters, the foregoing sequence of operations ensuring that the glass is treated with the same degree of sensitivity, delicacy yet strength as exerted by the hands and mouth of a skilled glass blower, to produce hollow glass bodies characterized by their great surface brilliance, great specific lightness and minimum dimensions of the single blowing elongation, so providing all the fine qualities desired for Christmas decorations but produced with speed and at low cost.

2. A blowing machine for automatic production of hollow glass bodies, starting from glass tubes, as in claim 1, characterized in that, to make a working sequence, the feed mandrel (10) gripping the glass tube (35), (71), moves towards the blowing mandrel (40) and inserts into it the stretched extremity (71) of said tube (35) which the latter mandrel (40) grips, then, the length (93) of tube (35) between the two mandrels (10) and (40) having been heated by a burner (88) to melting point, said mandrel (10) moves backwards stretching said length (93) of the tube (35) between the two mandrels when, the burner (88), moved onto point (93') between the end of the stretched length (93) and that part (94) of the tube (35) held by the blowing mandrel (40), having brought the glass to melting point, said mandrel (10) is moved further backwards to the end of its stroke separating the stretched length (93) from the part (94) held by the blowing mandrel (40), said part remaining closed like an ampoule, the blower (85), when said part has been sufficiently heated by the burner (88), blowing it up, through the mandrel (40), to the required size, an expelling device (96) then expelling the completed ampoule (94'), a cutter (101) then cutting off the molten tip (93'') of the length (93) of glass tube (35), thus making possible execution of a fresh sequence like the preceding one.

## Patentansprüche

1. Blasmaschine zur automatischen Herstellung von Glashohlkoerpern, ausgehend von Glasroehren, dadurch gekennzeichnet, dass die genannten Koerper (70), (94) aus Roehrensegmenten (35) gemacht sind, die jeweils durch Hitze und Ziehen abgetrennt und in heissem Zustand in freier Umgebung ohne Form geblasen werden, und zwar unter Verwendung von zwei zueinander ausgerichteten und sich drehenden Spindeln, von denen die eine eine Zufuehrspindel (10), durch die das Glasroehrchen (35) schrittweise laeuft, und die andere eine Blasspindel (40), wobei das Glasroehrchen (35) an der Zufuehrspindel (10) durch eine Pneumatikzange festgehalten wird, die in Form einer axialen Kupplung (73) ausgebildet ist, hermetisch umgeben von einem elastischen Gummischlauch (22), der wiederum von einer zylindrischen Kammer (31) umgeben ist; wobei es moeglich ist, durch Einblasen von Druckluft in die genannte Kammer durch die genannten Bohrungen (25, 26, 27), die durch die Kupplung (73) laufen, die Ausdehnung der Bereiche (32, 33, 34) in dem elastischen Schlauch (22) zu erhalten und daher Druck in den genannten Bereichen auf die Glasroehre (35), so dass die genannte Glasroehre fest an der Spindel (10) gehalten wird; wobei das waehrend dem vorangegangenen Zyklus verlaengerte Endstueck (69, 71) der Glasroehre (35) von der Blasspindel (40) ergriffen wird, und zwar durch eine Pneumatikzange, die als eine axiale elastische Gummikupplung (68) ausgelegt ist, welche die interne zylindrische Erweiterung (52) einer vorderen Rohrverbindung (48) mit der internen zylindrischen Erweiterung (60) eines hinteren zylindrischen Koerpers (59), der eine durch diesen gehende axiale Bohrung (61) aufweist; wobei letzterer Koerper an ein Verbindungsstueck (58) angeschlossen ist, welches ihn mit dem Geblaese (85) verbindet; wobei die genannte Kupplung (68) von einer hermetisch abdichtenden Kammer (65) umgeben und es moeglich ist, durch Fuellen der genannten Kammer mit Druckluft eine zentripetale Kontraktion der Kupplung (68) zu bewirken und diese das verlaengerte Ende (69, 71) der Glasroehre (35) greifen zu lassen und weiter ein hermetisches Abdichten zwischen letzterer und dem Verbindungsstueck (58) zu sichern, durch welches die Glasblaseluft eintritt, und wobei der vorbestimmte Arbeitsablauf sichert, dass das Glas mit demselbem Grad an Feinempfinden und Zartheit behandelt ist, wie es durch einen geschickten Glasblasser mit Haenden und Mund erfolgt, um Hohlglaskoerper herzustellen, die durch ihren grossen Oberflaechenglanz, eine grosse spezifische Leichtigkeit und minimale Abmessungen der einzelnen Blasstreckungen gekennzeichnet sind, so dass sie ueber alle gewuenschten Qualitaeten verfuegen, die man von Weihnachtsdetekorationen erwartet, jedoch schneller und mit niedrigeren Kosten hergestellt werden.

2. Blasmaschine zur automatischen Herstellung von Glashohlkoerpern, ausgehend von Glasroehren, nach Patentanspruch 1, dadurch gekennzeichnet, dass in einer Arbeitsfolge die Zufuehrspindel (10) die Glasroehre (35), (71) greift, diese der Blasspindel (40) zufuehrt und das gestreckte Ende (71) der genannten Roehre (35) hineinschiebt, welches on letzterer Spindel (40) gegriffen wird, und dass dann der Laengsabschnitt (93) der Roehre (35) zwischen den beiden Spindeln (10) und (40) durch einen Brenner (88) bis zum Schmelzpunkt aufgeheizt wird und die genannte Spindel (10) den genannten Laengsabschnitt (93) der Roehre (35) zwischen den beiden Spindeln unter Strecken desselben zurueckzieht, und dass, wenn der Brenner (88) sich bis an den Punkt (93') zwischen dem Ende des gestreckten Laengsabschnittes (93) und dem Teil (94) der Roehre (35), der durch die Blasspindel (40) gehalten wird, bewegt und das Glas an den Schmelzpunkt gebracht hat, die genannte Spindel (10) sich weiter bis zu ihrem Anschlag zurueckbewegt und dabei den gestreckten Laengsabschnitt (93) von dem von der Blasspindel (40) gehaltenen Teil (94) abtrennt, wobei der genannte Teil wie eine Ampulle verschlossen bleibt, und wobei die Blasvorrichtung (85), wenn der genannte Teil durch den Brenner (88) ausreichend erhitzt ist, diesen durch die Spindel (40) bis auf die erforderliche Groesse aufblaest, eine Ausstossvorrichtung (96) die komplette Ampulle (94') ausstoesst und eine Schneidvorrichtung (101) die geschmolzene Spitze (94'') des Laengsabschnittes (95) der Glasroehre (35) abschneidet, wonach dann eine neue Folge gleich wie die vorangegangene moeglich ist.

**Revendications**

1. Machine de soufflage pour la production automatique de corps de verre creux, à partir de tubes de verre, caractérisée par le fait que les dits corps (70), (94) sont faits à partir de segments de tube (35) qui se détachent sous l'effet de la chaleur et de la traction, un à la fois, soufflé lorsqu'ils sont chauds, dans un environnement libre, sans moule, grâce à l'utilisation de deux mandrins alignés et rotatifs, l'un étant un mandrin alimentateur (10) à travers lequel le tube de verre passe par intermittence, et l'autre un mandrin de soufflage (40), le tube de verre (35) étant fermement tenu par le mandrin alimentateur (10) au moyen d'une pince pneumatique formée d'un accouplement axial (73) hermétiquement entouré d'un tube de caoutchouc élastique (22), à son tour entouré d'une chambre cylindrique (31), cela rendant possible, par soufflage d'air comprimé dans la dite chambre, l'obtention, à travers les orifices (25, 26, 27) passant à travers l'accouplement (73), de la dilatation des zones (32, 33, 34) dans le tube élastique (22) et par conséquent la pression des dites zones sur le tube de verre (35) de façon à tenir le dit tube de verre fermement sur le mandrin (10), la partie terminale (69, 71) du tube de verre (35), allongée durant le cycle précédent, étant saisie dans le mandrin de soufflage (40) par une pince pneumatique formée d'un accouplement de caoutchouc élastique (68) qui raccorde hermétiquement le joint cylindrique interne (52) du raccord du tube antérieur (48) au joint cylindrique interne (60) d'un corps cylindrique postérieur (59), ayant un orifice axial (61) passant au travers, ce dit dernier corps étant fixé à une pièce de raccordement (58) la raccordant à la soufflerie (85), le dit accouplement (68) étant entouré d'une chambre cylindrique de scellement hermétique (65), rendant par conséquent possible, par remplissage de la dite chambre d'air comprimé, une contraction centripète de l'accouplement (68) faisant saisir l'extrémité allongée (69, 70) du tube de verre (35) en assurant par la suite en scellement hermétique entre ce dernier et la pièce de raccordement (58) à travers laquelle pénètre l'air de soufflage du verre, la séquence d'opérations précédentes assurant que le verre est traité avec le même degré de sensibilité, délicatesse et cependant force qu'il ne le serait s'il était soufflé par le bouche et les mains d'un souffleur de verre expert en cet art, pour produire des corps de verre creux, caractérisés par le haut degré de brillant de leur surface, leur haute légèreté spécifique et les dimensions minimum de chaque allongement de soufflage, offrant ainsi toutes les magnifiques qualités requises pour les décorations de Noël, mais produites rapidement et à bas prix.

2. Une machine de soufflage pour la production automatique de corps de verre creux, à partir de tubes de verre, comme à la revendication 1, caractérisée par le fait que, pour faire une séquence de travail, le mandrin alimentateur (10) serrant le tube de verre (35), (71), se déplace vers le mandrin de soufflage (40) et introduit à l'intérieur de celui-ci l'extrémité étirée (71) du dit tube (35) que le denier mandrin (40) serre ensuite, le segment (93) du tube (35) entre les deux mandrins (10) et (40) ayant été chauffé par un brûleur (88) au point de fusion, le dit mandrin (10) recule en étirant le dit segment (93) du tube (35) entre les deux mandrins quand, le brûleur (88), déplacé sur le point (93') entre l'extrémité du segment étiré (93) et cette partie (94) du tube (35) maintenue par le mandrin de soufflage (40), ayant amené le verre au point de fusion, le dit mandrin (10) est ultérieurement déplacé vers l'arrière jusqu'à l'extrémité de sa cource séparant le segment étiré (93) de la partie (94) tenue par le mandrin de soufflage (40), la dite partie restant fermée comme une ampoule, la soufflerie (85), lorsque la dite partie a été suffisamment chauffée par le brûleur (88), la soufflant, à travers le mandrin (40), à la taille désirée, un système d'expulsion (96) expulsant ensuite l'ampoule terminée (94'), un couteau (101) découpant ensuite l'extrémité fondue (93'') du segment (93) du tube de verre (35), rendant par conséquent possible l'exécution d'une nouvelle séquence équivalente à la précédente.

FIG.1

FIG.2

FIG.**3**

FIG.**4**

FIG.**5**

FIG. 6

FIG.7

EP 0 235 191 B1